(19) Europäisches Patentamt
European Patent Office
Office européen des brevets

(11) **EP 3 035 261 A1**

(12) **EUROPEAN PATENT APPLICATION**

(43) Date of publication:
**22.06.2016 Bulletin 2016/25**

(51) Int Cl.:
***G06Q 10/10*** *(2012.01)*

(21) Application number: **14198454.2**

(22) Date of filing: **17.12.2014**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Advanced Digital Broadcast S.A.
1292 Chambesy (CH)**

(72) Inventor: **Dabrowski, Bartosz
65-119 Zielona Gora (PL)**

(74) Representative: **Eupatent.pl
ul. Zeligowskiego 3/5
90-752 Lodz (PL)**

(54) **A system and a method for adaptive management of resources through analysis of change**

(57) A computer-implemented method for adaptive management of resources, the method comprising the steps of: detecting (201) a change of a property (161, 171, 181, 183, 191) of a resource (160, 170, 180, 190); creating (202) a property change record (151); storing (203) the property change record (151) in a history of changes database in a history storage (150); retrieving (204) the history of changes database (152) from the history storage (150); computing (205) a collective significance of the history of changes database (152); comparing (206) the collective significance of the history of changes database (152) against a threshold (121) of resource (120); and checking whether the result of the comparison constitutes a trigger for an event (141) and if so, executing (208) the event (141).

Fig. 1

EP 3 035 261 A1

**Description**

TECHNICAL FIELD

The present invention relates to a system and a method for adaptive management of resources through the means of analysis of change without the need to know the nature, volatility or usage scheme of the managed resources and their properties.

BACKGROUND

The present invention relates mainly to large complex systems containing large numbers of properties or settings, such that need to or can be managed in a homogenous way. There is a need for management in a manner not requiring knowledge about the nature of the managed properties or their inherent volatility.

Systems that contain many components used or managed by many users usually require constant monitoring of their state in order to provide reliability through backup management or predict failures through statistical analysis or simply present usage statistics or any other purpose requiring access to the system state however large and complex it may be. For systems that are extremely large or distributed over many locations it might prove inefficient or even impossible to provide the proposed services using standard known methods like periodic backup or on-demand statistics computation. This may be due to many factors e.g. storage of large amounts of data or connection throughput or any other limitation. Hence the present invention provides an adaptive method for these purposes.

It may be assumed in some systems that the frequency of usage or change of a property or setting is directly connected to the significance of that property for fitting a particular purpose. For instance, a setting that is changed very frequently, say once every 2 to 3 seconds, is not an important factor when backing up its value. On the other hand, a setting that has been changed by some administrative entity after not being changed for 1 year is most likely very important to back up. Another purpose is statistical analysis of system state. For this purpose changes that are frequent are most often considered destabilising and therefore important to include in statistics.

There are known various methods of ensuring either data access or system analysis e.g. periodic backup, incremental backup or access on demand.

For example, a US patent US8266291 discloses dynamic property volatility assignment and assessment for distributed manageable resources, including determining whether a property value of a remote resource has an associated volatility measurement. In response to determining that the property value of the remote resource has the associated volatility measurement, a network transaction is invoked to retrieve the property value at an interval that is less than or equal to the associated volatility measurement. In response to determining that the property value of the remote resource does not include the associated volatility measurement, a frequency-based assessment is performed comparing a frequency of change and a frequency of access for the property value. Caching the property value is performed in response to comparing the frequency-based assessment to a threshold value.

There is a need to further improve the methods where the conclusion of fitting for a particular purpose is based on frequency of access or change.

SUMMARY

There is dicslosed a computer-implemented method for adaptive management of resources, the method comprising the steps of: detecting a change of a property of a resource; creating a property change record; storing the property change record in a history of changes database in a history storage; retrieving the history of changes database from the history storage; computing a collective significance of the history of changes database; comparing the collective significance of the history of changes database against a threshold of resource; checking whether the result of the comparison constitutes a trigger for an event and if so, executing the event.

Preferably, the property change record created in step comprises a property identification and a time value.

Preferably, the time value is created using time value from time resource. Preferably, the property comprises values.

Preferably, the computing is carried out using a sum function based on a time value of property change record.

Preferably, the method further comprises a step of updating the history of changes in database.

Preferably, if the event is not executed, no action is taken and the processing of change ends.

There is also disclosed a computer program comprising program code means for performing all the steps of the computer-implemented method as described above when said program is run on a computer, as well as a computer readable medium storing computer-executable instructions performing all the steps of the computer-implemented method as described above when executed on a computer.

There is also disclosed a computer-implemented system for adaptive management of resources, the system comprising: a resource manager communicatively connected to a resource provider and a client system; a history storage configured to store a history of changes in database comprising property change records; a threshold resource; a trigger events resource; a network communicatively coupling elements of the system with a resource and a client system; whereas the resource manager configured to execute the steps of the method as described above.

BRIEF DESCRIPTION OF DRAWINGS

The present invention is shown by means of example embodiments on a drawing, in which:

Fig. 1 shows an example of a system for collecting and analysing distributed properties;
Fig. 2 shows an example of a method for collecting and analysing distributed properties.

NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

DETAILED DESCRIPTION

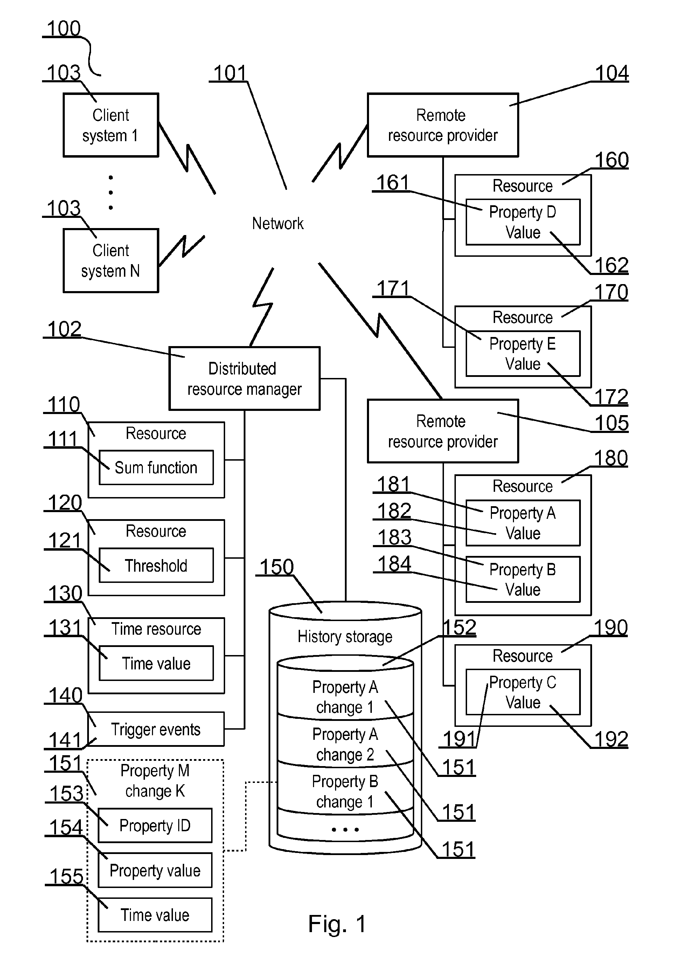

An example of a system 100 for collecting and analysing distributed properties is shown in Fig. 1.

The system 100 includes a resource manager 102 constituting a unit for managing the collection of properties and their changes and connected to resource providers 104-105. This connection can be through a depicted network 101 which can be the Internet, Ethernet or the like. However the usage of the word 'connected' is in no way limiting to this invention as the resource providers 104-105 can be part of the resource manager 102 or be emulated entities or the like. The resource manager 102 provides services to the clients 103 for the purposes of information, setting management and the like. The resource manager 102 can access the properties 161, 171, 181, 183, 191 provided respectively by resources 160, 170 180 and 190 and read the values 162, 172, 182, 184, 192. These values can be a number, text, metadata, Boolean value or the like. The values can be read via any means, for instance can be periodically polled or subscribed to or the like. Exemplary embodiment of such reading can be found in prior art.

The resource manager 102 contains a system history storage 150. The storage 150 can be a database or a hard drive device or a remote resource or the like. The system storage 150 is capable of storing system property change records 151. Each reading or a fraction of readings of properties 161, 171, 181, 183, 191 described above compares the previous value stored in the storage 150 of the same property. If the value is different, the resource manager 102 stores a property change record 151 in the history storage 150. It is in no way limiting to this invention how the definition of "different" is formed e.g. different can mean having the same value but at a different time of reading or "different" can mean a different number as understood by mathematics or the like. The property change record 151 is a set of property IDs 153, their read values 154 and time values 155 representing the moment of change relating to or acquired from resource 130 (see below) or the like. This set can be a sequence, an unordered set or the like. The property ID can be any entity unambiguously identifying a property in the system 100. This can be a text interpreted as a path on a file system or an URI for a remote resource and property or an index or the like. The resource manager 102 is equipped or otherwise can use in any manner a time resource 130 providing a time value 131. An example embodiment of such time resource 130 can be a real time clock. It is in no way limiting to this invention whether the time value 131 is a real time representation or a number of epochs of any kind or a number of actions or changes of any kind or the like. This time value 131 is used for the purpose of describing the moment of change of a property and can be degraded to a constant number if its usage is deemed unimportant in an embodiment. It is in no way limiting to this invention if the time resource 130 and/or time value 131 are used for other purposes as well.

The resource manager 102 stores every property change record 151 in the storage 150, in the history of changes database 152. The history storage 150 contains the history of changes database 152 which contains a set of property change records 151. This set can be a sequence, an unordered set or the like. Each property change record 151 contains the identification 153 of the property changed, the value the property change to 154 and a time value 155 allowing for computation of time since last change or change frequency or other e.g. time of change and the like. It is in no way limiting to this invention of the proprty value 154 is omitted in the definition. This is due to some systems may not require this value to detect changes. An exemplary embodiment of such system would use only subscription services to detect changes. In such approach it is not needed to know the previous value of the property, it is handled by the resource provider. For coordination of time values and ensuring they are comparable and provide valid computation the time resource 130 is used by the resource manager 102.

The resource manager 102 has at its disposal the sum function resource 110 and the threshold resource 120. They are used by the resource manager 102 to compute the collective significance of the history of changes database 152. The sum function 111 contained in resource 110 based on the time values 155 of property change records 151 contained in the history 150 provides a significance degree. This degree is compared against a threshold 121 contained in the resource 120 and if higher, trigger event 141 is invoked. Trigger events 141 are stored in the trigger resource 140. The usage of word 'higher' is in no way limiting to this invention and the comparison may be any computation yielding two or more results. The trigger event 141 may be a backup of the resource or resources containing the properties 153 or the whole system 100 or creation of statistical analysis or network notification or the like. The sum function 111 can be a simple sum of time values, or frequency of modification or access or the like. The threshold 121 can be a predefined number, a function or external resource or the like.

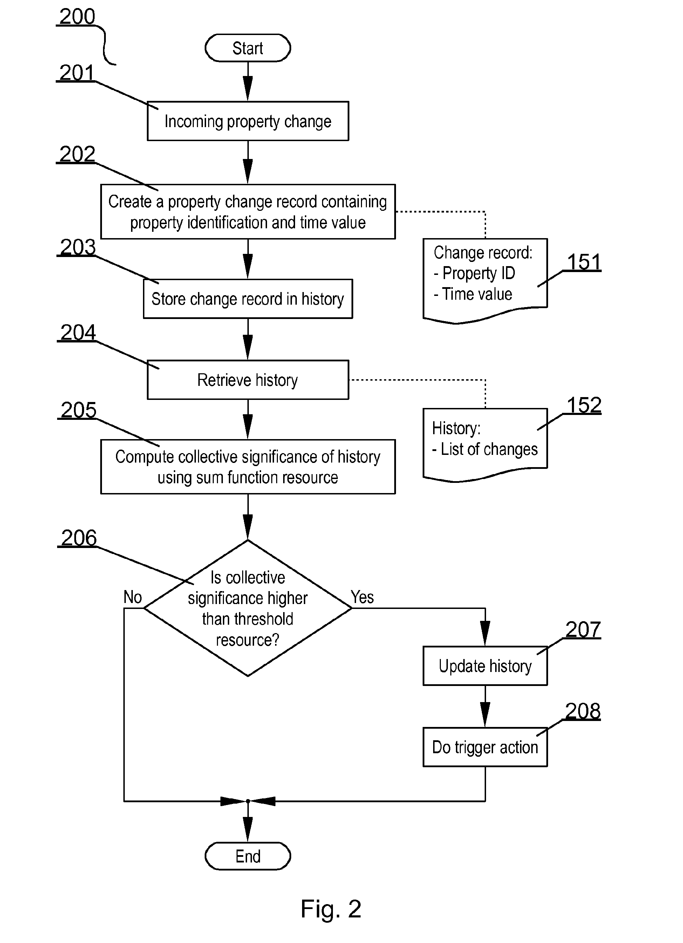

Fig. 2 explains how the system 100 functions. The process shown in Fig. 2 constitutes an exemplary embodiment of the operation of the exemplary system 100 in reference to the example embodiment described herein. The process is executed every time a change is detected in any property. The mechanism of change detection is described above.

The process begins with the change being detected at block 201. The resource manager then creates at block 202 a property change record 151 for storage in history of changes database 152. That change is stored at block 203. Subsequent steps aim at analysing the history of changes. At block 204 the history of changes database 152 is retrieved from the history storage 150. At block 205 the resource manager then uses the resource 110 and function 111 to compute a collective significance of the history. At block 206 this significance is compared against threshold 121 from resource 120. The comparison provides a result interpreted as a trigger to execute or not an event 141. This event is executed at block 208. The usage of yes/no result in the diagram is in no way limiting to this invention and serves as an illustration only for better understanding. At block 207 the history of changes database 152 is updated in the history storage 150. This update can erase the history to ensure a fresh start or record a trigger event or do nothing or the like.

On the other hand, if the event 141 is not executed as a result of comparison in block 206, no action is taken and the processing of the change ends.

It is in no way limiting how the resource 110 containing sum function 111 is located in the system 100. For instance, it is in no way limiting if the resource 110 is located in the history storage 150 for optimization and the history storage 150 uses the resource instead of or in addition to the resource manager 102. The same applies for the threshold resource 120 containing the threshold 121.

First implementation example

One example of embodiment may comprise a desktop system holding besides its functionality a number of settings changed by its users. These include display resolution, systems start-up configuration, mail server settings and many more. In general all of them can be represented by a vector:

$$S = [s_1, s_2, ..., s_n], n \in \mathbb{N}$$

In such approach, the elements of the vector constitute the identification of the settings whose sense is e.g. mail server name or resolution or the like. However, the system does not need to know this sense until a specific action (Fig. 1, element 140) is undertaken as a result of its operation. In this example this specific action is an incremental backup of the settings. An exemplary change incoming to the system is a change of display resolution. As a result of process 200 (Fig. 2) a change is created. This is represented by a pair:

$$c = (s', t), s' \in S \text{ and } t - \text{time of change}$$

This example uses a real time clock to define the time value and records the time of occurrence of change within the history as indicated by the above definition. The value t is interpreted as a number of hours since system start. Subsequent changes create a history of change within the system represented by a vector:

$$H = \left[ \left(s'_1, t_1\right), \left(s'_2, t_2\right), \dots, \left(s'_h, t_h\right) \right], h \in \mathbb{N} \text{ and } \forall i, j \in \{1, \dots, h\} \land i < j : t_i < t_j$$

This example contains a priority function that assumes the following:

Any change that occurs after 30 days or more since last change of the same setting has assigned a significance number of 1.

Any change that occurs after less than 30 days since last change of the same setting and more than 1 day since last change of the same setting has a significance number assigned of 0.1.

Any change that occurs after 1 day or less since last change of the same setting has a significance number assigned of 0.01.

$$p: \bigcup_{i=1}^{h} \{s'_i, t_i\} \rightarrow \{0.01, 0.1, 1\}$$

$$p_i = \begin{cases} 1, & \nexists j \in \{1, \dots, i-1\} : s'_j = s'_i \\ 1, & \exists j \in \{1, \dots, i-1\} : \left(s'_j = s'_i \land t_i - t_j \geq 720\right) \\ 0.1, & \exists j \in \{1, \dots, i-1\} : \left(s'_j = s'_i \land 720 > t_i - t_j \geq 24\right) \\ 0.01, & \exists j \in \{1, \dots, i-1\} : \left(s'_j = s'_i \land 24 \geq t_i - t_j\right) \end{cases}$$

The sum function contained in the sum resource computed the final significance of history:

$$SIG: \bigcup H \rightarrow \mathbb{R}$$

$$SIG(H) = \sum_{i=1}^{h} p_i$$

The threshold value provided by the threshold resource is determined so that it guarantees that no change that was made after 30 days or more since last change of the same setting is left not backed up. Hence threshold T:

$$T \overset{\text{def}}{=} 1$$

Hence if *SIG(H)* ≥ *T,* the system creates an incremental backup and erases the history H. This erase is an exemplary embodiment of action described at block 207 of process 200 (Fig. 2).

Second implementation example

An extension to the described first example may illustrate another embodiment of action at block 207 of process 200 (Fig. 2). In this example, the system of the first example is used. However, the action embodying block 207 of process 200 is changed. This action does not erase the history but rather moves it to another vector concatenating it with previous one:

$$H^{'} = \left[ \left( s^{'}_1, t_1 \right), \left( s^{'}_2, t_2 \right), \dots, \left( s^{'}_k, t_k \right) \right], k \in \mathbb{N} \ and \ \forall i, j \in \{1, \dots, k\} \wedge i < j : t_i < t_j$$

An additional threshold is present:

$$W \overset{\text{def}}{=} 100$$

Finally, the significance of the concatenated history is computed and if $SIG(H') \geq W$, the system creates a full backup of the settings and all incremental backups hence forth will be created against this backup. An update of history action in this case erases both the current history H and the concatenated history H'.

The implementation of the invention is effected by a particular system of Fig. 1 and computer executed method of Fig 2. Thus the machine or transformation test is fulfilled and the idea is not abstract.

It can be easily recognized, by one skilled in the art, that the aforementioned method for adaptive management of resources may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

**Claims**

1. A computer-implemented method for adaptive management of resources, the method comprising the steps of:

   - detecting (201) a change of a property (161, 171, 181, 183, 191) of a resource (160, 170, 180, 190);
   - creating (202) a property change record (151);
   - storing (203) the property change record (151) in a history of changes database in a history storage (150);
   - retrieving (204) the history of changes database (152) from the history storage (150);
   - computing (205) a collective significance of the history of changes database (152);
   - comparing (206) the collective significance of the history of changes database (152) against a threshold (121) of resource (120); and
   - checking whether the result of the comparison constitutes a trigger for an event (141) and if so, executing (208) the event (141).

2. The method according to claim 1, wherein property change record (151) created in step (202) comprises a property identification (153) and a time value (155).

3. The method according to claim 2, wherein the time value (155) is created using time value (131) from time resource (130).

**4.** The method according to claim 1, wherein property (161, 171, 181, 183, 191) comprises values (162, 172, 182, 184, 192).

**5.** The method according to claim 1, wherein computing (205) is carried out using a sum function (111) based on a time value (155) of property change record (151).

**6.** The method according to claim 1, wherein it further comprises a step of updating (207) the history of changes in database (152).

**7.** The method according to claim 1, wherein if the event (141) is not executed (208), no action is taken and the processing of change ends.

**8.** A computer program comprising program code means for performing all the steps of the computer-implemented method according to any of claims 1-7 when said program is run on a computer.

**9.** A computer readable medium storing computer-executable instructions performing all the steps of the computer-implemented method according to any of claims 1-7 when executed on a computer.

**10.** A computer-implemented system for adaptive management of resources, the system comprising:

- a resource manager (102) communicatively connected to a resource provider (104, 105) and a client system (103);
- a history storage (150) configured to store a history of changes in database (152) comprising property change records (151);
- a threshold resource (120);
- a trigger events resource (140);
- a network (101) communicatively coupling elements of the system with a resource (160, 170, 180, 190) and a client system (103); and
- whereas the resource manager (102) configured to execute the steps of the method according to any of claims 1-7.

Fig. 1

Fig. 2

Europäisches
Patentamt

European
Patent Office

Office européen
des brevets

## EUROPEAN SEARCH REPORT

Application Number

EP 14 19 8454

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X,D | US 8 266 291 B2 (HEIM JASON M [US]) 11 September 2012 (2012-09-11) * the whole document * | 1-10 | INV. G06Q10/10 |

-----

TECHNICAL FIELDS SEARCHED (IPC)

G06Q

The present search report has been drawn up for all claims

| Place of search | Date of completion of the search | Examiner |
|---|---|---|
| Munich | 13 May 2015 | Chauvet, Christophe |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 14 19 8454

This annex lists the patent family members relating to the patent documents cited in the above-mentioned European search report.
The members are as contained in the European Patent Office EDP file on
The European Patent Office is in no way liable for these particulars which are merely given for the purpose of information.

13-05-2015

| Patent document cited in search report | | Publication date | Patent family member(s) | Publication date |
|---|---|---|---|---|
| US 8266291 | B2 | 11-09-2012 | NONE | |

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 8266291 B